# EUROPEAN PATENT APPLICATION

(11) **EP 1 816 388 A1**
(43) Date of publication of application: **08.08.2007**
(21) Application number: 07250458.2
(22) Date of filing: 02.02.2007
(51) Int. Cl.: F16M 11/08, F16M 11/18

(54) **Display rotation apparatus**

(30) Priority: 03.02.2006 KR 20060010459
(71) Applicant: Samsung Electro-Mechanics Co., Ltd, Yeongtong-gu Suwon-si Gyeonggi-do 443-743 (KR)
(72) Inventor: Choi, Dong-Won 103-904 Woncheon Jugong, Suwon-si, Gyeonggi-do 443-755 (KR); Lee, Chil-Sung,, Suwon-si, Gyeonggi-do 441-758 (KR); Moon, Yang-Ho, Ansan-si, Gyeonggi-do 426-767 (KR); Kim, Jae-Kyung, Gyeonggi-do 426-150 (KR); Park, Kyoung-Shin 208-604 Woncheon Jugong 2danji, Yeongtong-gu Suwon-si, Gyeonggi-do 443-756 (KR)
(74) Representative: Mounteney, Simon James

(57) **Abstract**

The present invention is to provide a display rotation apparatus for preventing damage of the deceleration gear and the rotor of the motor. In one aspect, the invention features a rotation apparatus of a display, which comprises a stand (31), a guide (39) joined to the stand rotatably and configured to support the display, a motor (43) fixed to the stand and configured to have a shaft (44), a rotation transfer member joined to the shaft and configured to have transfer the rotational force of the motor selectively, wherein the rotation transfer member makes the rotational force of the motor is transferred to the guide at the time of automatic rotation.

## Description

### Field of the Invention

The present invention relates to a display rotation apparatus comprising a motor and a motor assembly.

### Background of the Invention

As the size and weight of a display such as a computer monitor or a television set have increased, display rotation apparatus has become widely used. The display rotation apparatus uses a motor and can orientate the display toward a user.

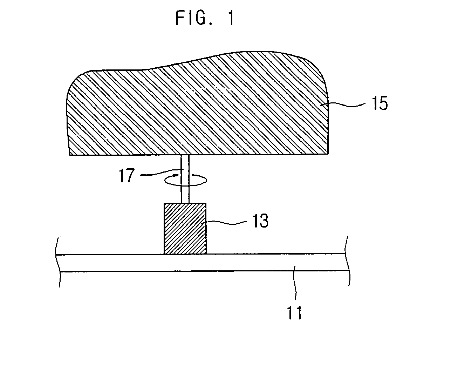

A conventional display rotation apparatus is illustrated in Fig. 1. Referring to Fig. 1, the conventional rotation apparatus includes a stand 11 fixed to the floor and a motor 13 having one end fixed to the stand 11 and the other end joined to a display 15. The motor 13 is connected to an external control apparatus (not shown) and enables the user to control the position of the display using a remote controller. The motor 13 has reduction gears in its interior because the display is relatively heavy and must be rotated slowly.

Although the rotation apparatus uses an external power supply to drive the motor 13, it is also possible for the user to rotate the display manually when the external power supply is not provided to the rotation apparatus. However, if the display 15 is rotated manually, the shaft 17 connecting the display 15 and the motor 13 is rotated as well, which can cause damage to the reduction gear and the rotor of the motor 13.

### Summary of the Invention

In one aspect, the invention features a display rotation apparatus, which comprises a stand, a guide joined to the stand rotatably and configured to support the display, a motor fixed to the stand and having a shaft, a rotation transfer member joined to the shaft and configured to selectively transfer the rotational force of the motor, where the rotation transfer member transfers the rotational force of the motor to the guide at times of automatic rotation.

Embodiments may include one or more of the following features. For example, the rotation transfer member may have a solenoid switch joined to the shaft and a clutch, ends of which clutch are joined to the solenoid switch and the guide respectively, where the solenoid switch may transfer the rotational force of the motor to the guide through the clutch at times of automatic rotation.

The rotation transfer member may include a vertical cam joined to the shaft and a clutch having ends joined to the vertical cam and the guide respectively, where the vertical cam may move the clutch such that the rotational force of the motor is transferred to the guide through the clutch at times of automatic rotation

The rotation transfer member may comprise an electrical clutch joined to the guide and the shaft respectively, where the electrical clutch may transfer the rotational force of the motor to the guide at times of automatic rotation.

The stand may have an insertion hole in which the motor is fixed and rotation holes arranged around the insertion hole and configured to have a predetermined rotation angle, a fixing member is inserted into the rotation hole and configured to have predetermined rotation angles, where a fixing member may be inserted into the rotation hole and fixed to the guide. Also, a bearing may be interposed between the guide and the stand and/or between the guide and the fixing member. The rotation hole may have a latch groove around its outer surface, and the electric clutch may include a cylinder, which is joined to the guide and in which the shaft is inserted, and a latch member located in the cylinder and configured to latch onto the latch groove to press the inner surface at times of automatic rotation.

Also, the latch member may have a shaft latch part that latches onto the latch groove and a cylinder latch part formed as a single body with the shaft latch part, where the cylinder latch part may have a cutting part configured to press the inner surface of the cylinder at times of automatic rotation. A power spring cam may be joined to the shaft to provide a rotational force of an opposite rotary direction to that of the shaft.

### Brief description of the Drawings

Embodiments of the present invention will now be described with reference to the accompanying drawings, wherein:
Fig. 1 is a schematic diagram of a conventional display rotation apparatus;
Fig. 2 is a cross sectional view of a display rotation apparatus in accordance with a first embodiment of the present invention;
Fig. 3A illustrates a separated clutch in accordance with a first embodiment of the present invention;
Fig. 3B illustrates an engaged clutch when a solenoid switch is energised in accordance with a first embodiment of the present invention;
Fig. 4 is a plan view of a fixing member inserted into a stand in accordance with a first embodiment of the present invention;
Fig. 5 is a cross sectional view of a display rotation apparatus in accordance with a second embodiment of the present invention;
Fig. 6A is a schematic diagram of a separated clutch in accordance with a second embodiment of the present invention;
Fig. 6B is a schematic diagram of an engaged clutch when a vertical cam is operated in accordance with a second embodiment of the present invention;
Fig. 7 is a cross sectional view of a display rotation apparatus using an electric clutch in accordance with a third embodiment of the present invention;
Fig. 8A illustrates a latch mechanism having a latch member and a latch groove; and
Fig. 8B is illustrates a latch mechanism having a latch member being latched to a latch groove of a shaft.

### Detailed Description

Hereinafter embodiments of a display rotation apparatus of a display according to the present invention will be described in more detail by way of example with reference to the accompanying drawings.

In the following description, a number of specific details are presented in order to provide a thorough understanding of embodiments of the present invention. It will be apparent, however, to a person skilled in the art that these specific details need not be employed to practice the present invention.

In the description with reference to the accompanying drawings, those components are rendered the same reference number that are the same or are in correspondence regardless of the figure number, and redundant explanations are omitted.

Also, the basic principles will first be described before discussing the preferred embodiments of the invention.

Before the rotation apparatus in accordance with one embodiment of the present invention is described, the definitions of automatic rotation and manual rotation will be briefly discussed. Automatic rotation is defined as to rotate a display using a driving force of a motor and manual rotation is defined as to rotate a display or to rotate a guide configure to support the display manually by the user. Standby mode is defined as when the display is ready to be rotated by a user or a motor.

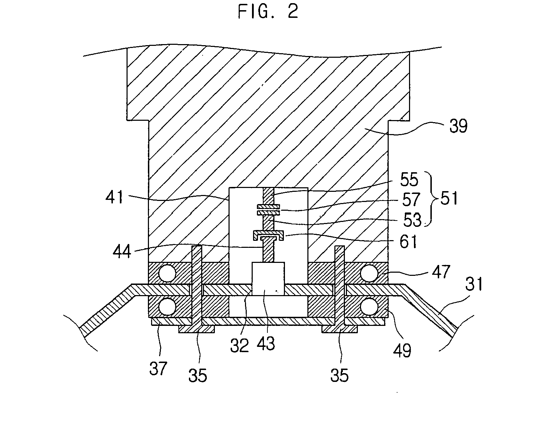

Referring to Fig. 2, a display rotation apparatus in accordance with a first embodiment of the present invention comprises a stand 31, a guide 39 rotatably joined to the stand and configured to support the display (not shown), a motor 43 fixed to the stand 31 having a shaft 44, a solenoid switch 61 joined to the shaft 44 and a clutch 51 having a first end and a second end joined to the solenoid switch 61 and the guide 39 respectively. And an upper bearing 47 is interposed between the guide 39 and the stand 31, a lower bearing 49 is interposed between the stand 31 and a bracket 37. A fixing member 35 combines the bracket 37 and the guide 39.

The display rotation apparatus in accordance with a first embodiment of the present invention can avoid the damage of a reduction gear because the clutch 51 is disengaged when the display is rotated manually. This allows the passive shaft 55 to be rotated without rotating the shaft 44 (of the motor 43) and the reduction gear. At the time of automatic rotation, solenoid switch 61 engages the clutch 51, so that the rotational force of the motor 43 is transferred to the guide 39 through the clutch 51.

The guide 39 is rotated with the driving shaft 53 and the passive shaft 55 of the clutch 51, the bracket 37 and the fixing member 35 at the time of automatic rotation. At the time of manual rotation, the guide 39 is rotated with the passive shaft 55, the bracket 37 and the fixing member 35. A display such as a television or a monitor is mounted on the guide 39 and the orientation of the display is determined by the rotation of the guide 39. A upper bearing 47 is interposed between the guide 39 and the stand 31. The guide 39 is arranged to maintain the display at a predetermined height when the driving shaft 53 and the passive shaft 55 are engaged with each other or when the driving shaft 53 and the passive shaft 55 are disengaged with each other.

A rotation hole 41 is located at the center of the guide 39. The clutch 51 and the solenoid switch 61 are located within the rotation hole 41. The passive shaft 55 of the clutch 51 is fixed to a top surface of the rotation hole 41. The rotation hole 41 is in communication with an insertion hole 32. The insertion hole 32 is fixed to the stand 31.

The guide 39 can be shaped as a circular or rectangular plate or any other suitable shape. In particular, the guide 39 can be formed with the display as a single body in accordance with design specification.

The stand 31 is fixed to a floor or a wall and is arranged to support the display rotation apparatus. An insertion hole 32 is formed in the center of the stand 31 and the motor 43 is inserted and fixed to the insertion hole 32. The insertion hole 32 is in communication with the rotation hole 41 of the guide 39, and the insertion hole 32 of the stand 31 and the rotation groove 41 are the center of the display rotation apparatus.

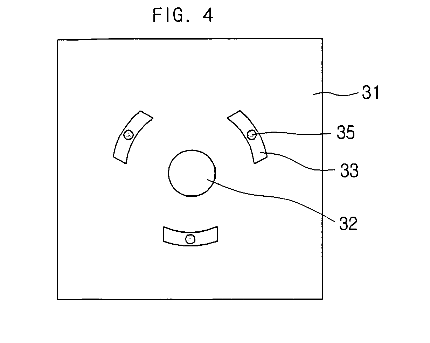

As illustrated in Fig. 4, a plurality of arcuate rotation holes 33 are formed around the circumference of the insertion hole 32. The rotation holes 33 are arcs of the same radius. Fixing members 35 are inserted through respective ones of the rotation holes 33. The fixing members 35 rotate with the guide 39 as a single body and are guided by the rotation holes 33. The angle through which the fixing member 35 and guide 39 can rotate is determined by the arc.

The motor 43 is inserted and fixed to the rotation hole 41 of the guide 39 and the shaft 44 of the motor 43 is joined to the solenoid switch 61. The rotor of the motor 43 comprises shaft 44, coils and magnets. The motor 43 also includes a reduction gear to decrease the speed of revolution of the display and to increase the torque. The reduction gear comprises a gear train to decrease the rotational force generated by the motor 43 and to obtain greater torque.

The motor 43 can be DC or AC.

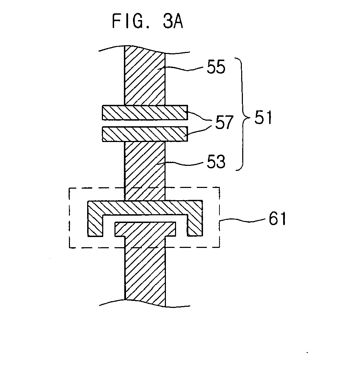

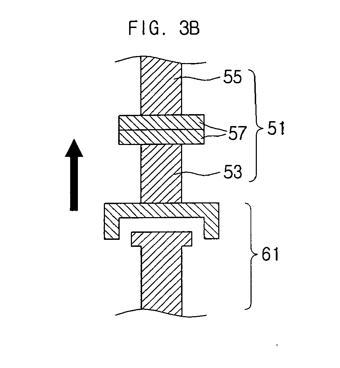

As illustrated in Fig. 3b, when a current is supplied, the solenoid switch 61 elevates the drive shaft 53 of the clutch 51 vertically to engage with the passive shaft 55. The solenoid switch 61 is operated at the time of the automatic rotation when the rotational force of the motor 43 is transferred to the guide 39 through the drive shaft 53 and the passive shaft 55 of the clutch 51. If a current is not supplied to the solenoid switch 61, as illustrated in Fig. 3a, the passive shaft 55 and the drive shaft 53 are disengaged from each other. Therefore, at the time of mannual rotation only the passive shaft 55 and the guide 39 are rotated but the drive shaft 53 and shaft 44 of the motor 43 are not rotated. Consequently, the display rotation apparatus can avoid the damage to the deceleration gear and the rotor of the motor.

The clutch 51 comprises a drive shaft 53 joined to the solenoid switch 61, a passive shaft 55 joined with the guide 39 and a pair of disks 57 formed at one end of the drive shaft 53 and one end of the passive shaft 55.

The drive shaft 53 is joined with the solenoid switch 61 and configured to be elevated by the operation of the solenoid switch 61 in order to cause the disks 57 of the drive shaft 53 and the passive shaft 55 to engage with each other. As a result, the driving force of the motor 43 is transferred to the guide 39 at the time of the automatic rotation.

As illustrated in Fig. 3a, the passive shaft 55 is joined to guide 39 and separated from the drive shaft 53 when a current is not supplied to the solenoid switch 61.

The disk 57 is formed at one end of the drive shaft 53 and at an end of the passive shaft 55, facing each other. Both the disks 57 are engaged when the solenoid switch 61 is energised. When the disks 57 are engaged with each other the rotational force of the motor 43 is transferred through the drive shaft 53 to the passive shaft 55.

The fixing members 35 penetrate through the rotation holes 33 of the stand 31 and are inserted fixedly into the lower end of the guide 39. The fixing members 35 rotate with the guide 39 and the bracket 37, and they are configured to rotatably support the guide 39 about the stand 31. The fixing members 35 are inserted into the rotation hole, as illustrated in Fig. 3, and the rotation holes 33 restrict the rotation angle of the fixing members 35.

The bracket 37 is interposed between the fixing members 35 and the lower bearing 49 and is configured to support the fixing member 35. The upper bearing 47 is interposed between the stand 31 and the guide 39. The lower bearing 49 makes the rotation of the bracket 37 smooth, and the upper bearing 47 makes the rotation of the guide 39 smooth. The lower bearing 49 and the upper bearing 47 can be conventional ball bearing and so on.

The automatic rotation and the manual display rotation of the rotation apparatus according to an embodiment of the present invention is explained below with reference to Fig. 2, Fig. 3A, Fig. 3B and Fig. 4.

Referring to Fig. 3A, the passive shaft 55 and the drive shaft 53 of the clutch 51 are separated from each other during a standby mode. The display is supported by the guide 39. If a user wants to rotate the display manually, the guide 39, the passive shaft 55, the fixing member 35 and the bracket 37 are rotated. This is because the solenoid switch 61 is not energised and the passive shaft 55 is not engaged with the drive shaft 53. Consequently, the shaft 44 of the motor 43 and the deceleration gear joined to the shaft 44 are not rotated at the time of the manual rotation. Therefore this avoids any damage to the shaft 44 and the reduction gear. The rotational angle of the guide 39 is determined by the central angle of the rotation holes 33.

If a user wants to rotate the display automatically, the solenoid switch 61 is energised so that the drive shaft 53 is elevated to engage with the passive shaft 55 as illustrated in Fig. 3B. The motor 43 is also activated. If the motor 43 is operated, the driving force of the motor 43 is transferred to the guide 39 via the clutch 51. Consequently, the guide 39, the drive shaft 53 and passive shaft 55 of the clutch 51, the bracket 37 and the fixing member 35 are rotated. Because the solenoid switch 61 is energised throughout the operation of the motor 43, the drive shaft 53 and the passive shaft 55 are engaged with each other by the disk 57. When the automatic rotation is terminated, the motor 43 and the solenoid switch 61 cease to operate and the standby mode is resumed as illustrated in Fig. 3a.

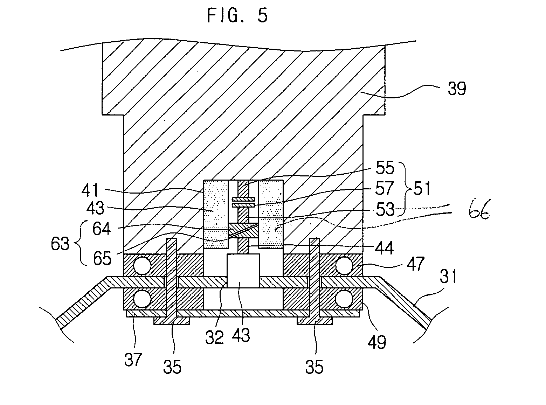

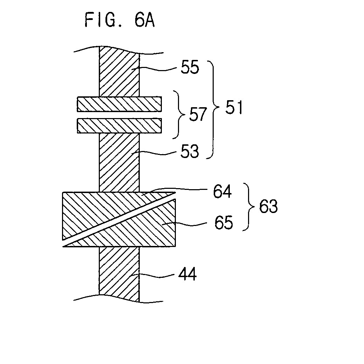

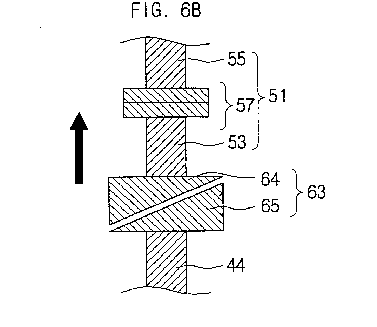

A second embodiment of the display rotation apparatus according to the present invention will be explained below with reference to Fig. 5, Fig. 6A and Fig. 6B.

Referring to Fig. 5, the display rotation apparatus according to a second embodiment of the present invention has the same or similar structure with the above embodiments. Accordingly, structural differences is mainly explained below.

A vertical cam 63 of the present embodiment comprises an upper cam 64 and a lower cam 65. The vertical cam 63 is formed by cutting a cylinder diagonally and by coupling the upper cam 64 and the lower cam 65 with each other. The upper cam 64 is connected to the drive shaft 53 of the clutch 51 and the lower cam is connected to the shaft 44 of the motor 43. The lower cam 65 is rotated by the motor 43 to elevate the upper cam 64 vertically, so that the clutch 51 is engaged. Because the vertical cam 63 is confined by the inner surface 66 of the guide 39, linear movement of the upper cam 64 owing to the rotation of the lower cam 65 is restricted by the inner surface 66.

The operation of the rotation apparatus of display according to the present embodiment is explained with reference to Fig. 5, Fig. 6A and Fig. 6B.

Referring to Fig. 6a, during the standby mode the drive shaft 53 and the passive shaft 55 of clutch 51 are separated from each other. If a user rotates the display or the guide 39 manually, the shaft 44 and reduction gear of motor 43 will not be rotated. Therefore this prevents any damages of the shaft 44 and reduction gear. This is because the clutch 51 is disengaged. At the time of the manual rotation, only the guide 39, the passive shaft 55, the fixing member 35 and the bracket 37 are rotated. The rotational angle of the display is determined by the rotation holes 33 formed in the stand 31.

At the time of the automatic rotation, the motor 43 is operated to rotate the lower cam 65 joined with the shaft 44, so that the upper cam 64 which is in contact with the lower cam 65 which is guided by the inner surface 66 elevates vertically. Consequently, as illustrated in Fig. 6B, the drive shaft 53 and the passive shaft 55 of clutch 51 are engaged with each other, and the rotational force of the motor 43 is transferred to the guide 39 through the clutch 51 to rotate the guide 39 and the display.

When the automatic rotation is terminated, an opposing rotational force of the shaft 44 is applied to the shaft 44 by a power spring (not shown) combined to the shaft 44 of the motor 43, so that the lower cam 65 is separated from the upper cam 64 and as a result the drive shaft 53 and the passive shaft 55 are also separated. Therefore, the display rotation apparatus according to the present embodiment enters the standby mode.

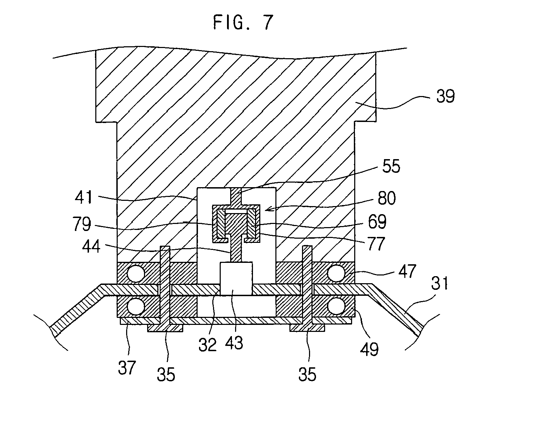

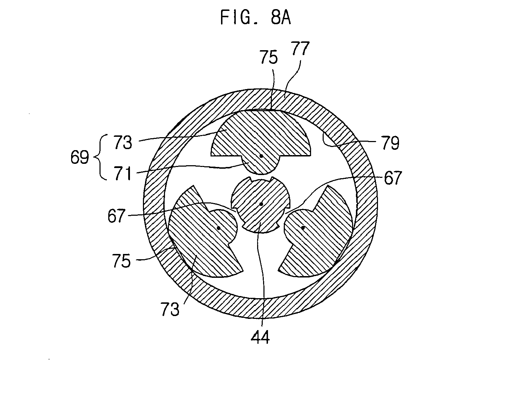

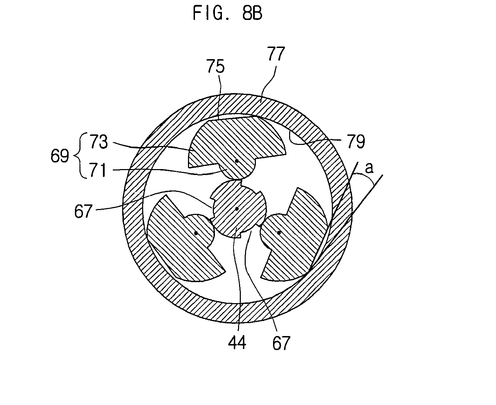

The third embodiment of a display rotation apparatus of the present invention is explained with reference to Fig. 7, Fig. 8A and Fig. 8B.

Referring to Fig. 7, Fig 8A and Fig. 8B, the display rotation apparatus according to a third embodiment of the present embodiment has the same or similar structure as the above embodiment as explained with reference to Fig. 2, Fig. 3 and Fig.4 except the shaft 44 of the motor 43 is connected to the guide 39 by an electric clutch 80 instead of the clutch 51. Accordingly, structural differences are explained below.

As illustrated in Fig. 8A and Fig. 8B, latch grooves 67 are formed along the circumference of the shaft 44. The latch grooves 67 have the same width and each of has a predetermined depth. The latch member 69, as illustrated in Fig 8A and Fig. 8B, includes a shaft latch part 71 and cylinder latch part 73 formed as a single body. One end of the shaft latch part 71 of the latch member 69 can be latched onto the latch groove 67. A power spring (not shown) is combined with the shaft 44 and it is arranged to provide an opposing rotational force to the rotation direction of the shaft 44.

Referring to Fig. 7, an electric clutch 80, having a cylinder 77 formed as a single body with a passive member 55. The latch members 69 are arranged to have the same gap inside of the cylinder 77. The latch member 69 presses against the inner surface 79 of the cylinder 77 when the shaft 49 is rotated. Part of the shaft 44 is inserted into the cylinder 77, so as to transfer the rotational force of the shaft 44 to the guide 39 through the passive member 55.

The shaft latch part 71 is configured to have a smaller diameter than the cylinder latch part 73. As illustrated in Fig. 8, the shaft latch part 71 of the latch member 69 is separated from the shaft 44 during the standby mode and the manual rotation. During the automatic rotation, as illustrated in Fig. 8b, the shaft latch part 71 engages which the latch groove 67 of the shaft 44 such that the cylinder latch part 73 is arranged to press against the inner surface 79 of the cylinder 77.

The cylinder latch part 73 has a greater diameter than the shaft latch part 71 and a cutting part 75 formed flatly at one side of it. The cylinder latch part 73 is formed as a single body with the shaft latch part 71. One end of the cutting part 75 is arranged to press against the inner surface of the cylinder by the shaft latch part 71 latched at the latch groove 67 due to the rotation of the shaft 44. Consequently, the cylinder 77 is arranged to receive the rotational force of the shaft 44 and transfer it to the passive shaft 55, which is formed as a single body with the cylinder 77 and the guide 39.

The cylinder 77 has a cylindrical hole at the centre of it and the upper surface of the cylinder 77 is joined to the passive shaft 55, which is connected to the guide 39. The cylindrical hole of the cylinder 77 has an inner surface 79 which is in contact with one end of the cutting part 75 as illustrated in Fig. 8B.

The operation of the display rotation apparatus according to the present invention is explained with reference to Fig. 7, Fig 8A and Fig 8B.

During the standby mode, as illustrated in Fig 8a, the shaft latch part 71 is separated from latch groove 67. Both ends of the cutting part 75 touch the inner surface 79 of the cylinder 77 but are not pressed against the inner surface of the cylinder 77, Consequently, if the display is rotated manually, the guide 39, the passive shaft 55 and the cylinder 77 joined to the passive shaft 55, the fixing member 35 and the bracket 31 are rotated. At the time of the manual rotation, the shaft 44 of the motor 43 and the deceleration gear connected to the shaft 44 are not rotated. Therefore this avoids the shaft 44 and the deceleration gear from being damaged.

At the time of the automatic rotation, the shaft latch part 71 of the latch member 69 is latched to the latch groove 67, so that one end of the cutting part 75 of the cylinder latch part 73 is configured to press against the inner surface 79 of the cylinder 77. In this configuration, angle of inclination "a" is formed between the cutting part 75 and the inner surface 79. Accordingly, the latch member 69 is latched against the shaft 44 and cylinder 77 at the time of the automatic rotation; the rotational force of the shaft 44 is therefore transferred to the cylinder 77 having the passive shaft 55.

After the automatic rotation is terminated, the elastic restoring force which is opposite to the rotation direction of the shaft 44 is acted upon the shaft 44 by the power spring (not shown). This allows the display rotation apparatus according to the present embodiment is returned to the standby mode as illustrated in Fig. 8a.

While the present invention has been described with reference to particular embodiments, it is to be appreciated that various changes and modifications may be made by those skilled in the art without departing from the spirit and scope of the present invention, as defined by the appended claims and their equivalents.

## Claims

1. A display rotation apparatus, the rotation apparatus comprising:
a stand;
a guide rotatably joined to the stand and arranged to support a display;
a motor fixed to the stand and having a shaft; and
a rotation transfer member joined to the shaft and configured to selectively transfer the rotational force of the motor,
wherein the rotation transfer member is configured to transfer the rotational force of the motor to the guide at times of automatic rotation.

2. The rotation apparatus of claim 1, wherein the rotation transfer member comprises a solenoid switch joined to the shaft and a clutch having both ends thereof joined to the solenoid switch and the guide respectively, and
the solenoid switch is configured to move the clutch such that the rotational force of the motor is transferred to the guide through the clutch at times of automatic rotation.

3. The rotation apparatus of claim 1, wherein the rotation transfer member comprises a vertical cam joined to the shaft and a clutch having both ends thereof joined to the vertical cam and the guide respectively, and
the vertical cam is configured to move the clutch such that the rotational force of the motor is transferred to the guide through the clutch at times of automatic rotation.

4. The rotational apparatus of claim 1, wherein the rotation transfer member comprises an electrical clutch joined to the guide and the shaft respectively, and
the electrical clutch is configured to transfer the rotational force of the motor to the guide at times of automatic rotation.

5. The rotational apparatus of claim 4, wherein the rotation hole has a latch groove around its outer surface, and
the electric clutch comprises a cylinder joined to the guide and having the shaft inserted therein and a latch member located in the cylinder and configured to latch onto the latch groove to press the inner surface at times of automatic rotation.

6. The rotational apparatus of claim 5, wherein the latch member has a shaft latch part configured to latch onto the latch groove and a cylinder latch part formed as a single body with the shaft latch part, and
the cylinder latch part has a cutting part configured to press the inner surface of the cylinder at times of automatic rotation.

7. The rotational apparatus of claim 6, wherein a power spring is joined to the shaft to provide a rotational force of an opposite rotary direction to that of the shaft.

8. The rotational apparatus of any one of claims 5 to 7, wherein a bearing is interposed between the guide and the fixing member.

9. The rotational apparatus of any one of claims 2 to 8, wherein the stand has an insertion hole having the motor fixed therein and rotation holes arranged around the insertion hole and configured to have predetermined rotation angles, and
a fixing member inserted into the rotation hole and fixed to the guide.

10. The rotational apparatus of claim any one of claims 2 to 9, wherein a bearing is interposed between the guide and the stand.
